# EUROPÄISCHE PATENTANMELDUNG

(11) **EP 3 244 146 A1**
(43) Veröffentlichungstag der Anmeldung: **15.11.2017**
(21) Anmeldenummer: 17169898.8
(22) Anmeldetag: 08.05.2017
(51) Int. Cl.: F25D 19/00, F25D 23/00

(54) **TRANSPORTKÄLTESYSTEM**

(30) Priorität: 13.05.2016 DE 102016005900
(71) Anmelder: Liebherr-Transportation Systems GmbH & Co. KG, 2100 Korneuburg (AT)
(72) Erfinder: Kitanoski, Filip, 1060 Wien (AT); Schilling, Florian, 1080 Wien (AT); Hille, Andreas, 71272 Renningen (DE)
(74) Vertreter: Laufhütte, Dieter

(57) **Zusammenfassung**

Transportkältesystem (1) für eine Transporteinheit (20), umfassend einen Lufteinlass (2) zum Einströmen von Luft, einen Luftkanal (3) zum Leiten der eingeströmten Luft, einen Kondensator (4), der im Luftkanal (3) angeordnet ist, um mit der im Luftkanal (3) strömenden Luft beaufschlagt zu werden, und einen Kondensatorlüfter (5) zum Ansaugen der Luft in den Lufteinlass (2) und zum Ausblasen der Luft aus einem Luftauslass (6), wobei das Transportkältesystem (1) eine flächige Befestigungsseite (7) aufweist, die dazu ausgelegt ist, bei Befestigung an einer Transporteinheit (20) dieser zugewandt zu sein, und wobei der Luftauslass (6) die Luft an einer der Befestigungsseite (7) gegenüberstehenden Seite (8) des Transportkältesystems ausgibt (1).

## Beschreibung

Die Erfindung betrifft ein Transportkältesystem für eine Transporteinheit, insbesondere einen Sattelauflieger, der dazu ausgelegt ist, mit einer Zugmaschine gekoppelt zu werden.

Transportkältesysteme dienen dazu, das Innere von Containern, Sattelaufliegern oder dergleichen auf ein bestimmtes Temperaturniveau herabzukühlen bzw. dieses gewünschte Temperaturniveau unabhängig von der Umgebungstemperatur zu halten. Die Qualität und die Haltbarkeit von Waren stehen oftmals im starken Zusammenhang mit deren Lagertemperatur. So ist beispielsweise bei Frischfleisch oder bei tiefgefrorenen Waren darauf zu achten, dass während eines Transportvorgangs dieser Waren die Kühlkette nicht unterbrochen ist, sodass die Waren einen bestimmten Temperaturbereich während des Transports nicht verlassen. Um dies zu bewerkstelligen gibt es Transportkältesysteme, die dazu ausgelegt sind, Transporteinheiten wie Container oder dergleichen auf eine gewünschte Temperatur herunterzukühlen.

Für das Funktionieren eines Transportkältesystems ist es erforderlich, dass eine angesaugte Umgebungsluft zum Kühlen eines Kondensators eines Kältekreislaufs des Transportkältesystems ausreichend kühl ist, um den Kondensator eines Kühlkreises bzw. den Kältekreislauf zu kühlen. Bei zu hoher Temperatur der angesaugten Umgebungsluft kann der Fall einer Abschaltung des Kältekreislaufs eintreten, da der Kondensator nicht ausreichend gekühlt werden kann und somit ein zu hoher Druck in dem Inneren des Kältekreislaufs entsteht.

Ist beispielsweise das Transportkältesystem an einem Sattelauflieger angebracht, können heiße Tage, Staus oder alleine das Halten an roten Ampeln zu einem Abschalten des Systems führen. Eine solche Abschaltung führt typischerweise unweigerlich zu einem ungewünschten Ansteigen der Innentemperatur der Transporteinheit, sodass hierbei die Gefahr besteht, dass die transportierten Waren ihren erforderlichen Temperaturbereich verlassen und verderben bzw. für den Verkauf aufgrund temperaturbedingter Schädigungen nicht mehr geeignet sind.

Verstärkt wird diese Problematik, da die am Markt verfügbaren Transportkältesysteme die Umgebungsluft zur Kühlung des Kondensators in einem mittigen Bereich des Transportkältesystems ansaugen. Das im Regelfall zwischen einer Zugmaschine und einer Stirnseite eines Sattelaufliegers am Sattelauflieger angeordnete Transportkältesystem nimmt bei einem Stehenbleiben der Zugmaschine Luft auf, die unter anspruchsvollen Bedingungen zu heiß für ein Kühlen des Kondensators ist. Problematisch ist hierbei auch, dass die Wärmequellen der Zugmaschine sich zum Teil unterhalb des Transportkältesystems befinden, und eine von den Wärmequellen abgehende Warmluft in den Lufteinlass des Transportkältesystems strömt. So ist der Motor einer Zugmaschine unterhalb des Lufteinlasses des Transportkältesystems angeordnet, so dass deren warme Abluft in den Lufteinlass einströmen kann.

Es ist ein Ziel der vorliegenden Erfindung ein Transportkältesystem zu schaffen, das eine robustere und zuverlässigere Kühlfunktion auch bei herausfordernden Umgebungsbedingungen bereitstellt. Solche herausfordernden Umgebungsbedingungen können eine hohe Außentemperatur, eine hohe Asphalttemperatur, hohe Temperatur der Motorabwärme, ein Stehenbleiben einer Zugmaschine, direkte Sonneneinstrahlung o.Ä. sein. Dies gelingt mit einem Transportkältesystem, das die Merkmale des Anspruchs 1 aufweist.

Demnach umfasst das Transportkältesystem für eine Transporteinheit einen Lufteinlass zum Einströmen von Luft, im oberen Bereich in welchem die angesaugte Luft möglichst unbeeinflusst von Wärmequellen ist, einen Luftkanal zum Leiten der einströmenden Luft, einen Kondensator, der im Luftkanal angeordnet ist, um mit der im Luftkanal strömenden Luft beaufschlagt zu werden, und einen Kondensatorlüfter zum Ansaugen der Luft in den Lufteinlass und zum Ausblasen der Luft aus einem Luftauslass, wobei das Transportkältesystem eine flächige Befestigungsseite aufweist, die dazu ausgelegt ist, bei Befestigung an einer Transporteinheit dieser zugewandt zu sein. Das Transportkältesystem ist dadurch gekennzeichnet, dass der Luftauslass die Luft an einer der Befestigungsseite gegenüberstehenden Seite des Transportkältesystems ausgibt.

Der Kondensator ist dabei ein Teil eines Kältekreislaufs, der typischerweise einen Kompressor, einen Kondensator, eine Drossel und einen Verdampfer umfasst. Da am Kondensator im Kältekreis Wärme, die zum einen am Verdampfer an das Kältemittel übertragen wird und zum anderen durch die Kompression des Kältemittels im Verdichter aus mechanischer Energie umgewandelt wird, abgegeben wird, ist es für das Aufrechterhalten eines funktionierenden Kältekreislaufs erforderlich, den Kondensator kontinuierlich mit Luft zu kühlen, um die beim Kondensieren des im Kondensators strömenden Kältemittels frei werdende Energie abzuleiten. Hierzu wird mit Hilfe des Kondensatorlüfters Luft über einen Lufteinlass angesaugt, die den Kondensator bzw. das im Kondensator strömende Kältemittel kühlt und danach durch den Kondensatorlüfter über einen Luftauslass nach außen abgegeben.

Gemäß der Erfindung wird die Luft an einer Seite des Transporkältesystems ausgegeben, die einer Befestigungsseite des Transportkältesystems gegenübersteht.

Typischerweise besitzen Transportkältesysteme einen schrankähnlichen Grundaufbau, wobei eine der flächigen Seiten dazu ausgelegt ist, einer Transporteinheit zugewandt zu sein. Die bei einem Befestigen des Transportkältesystems einer Transporteinheit (bspw. einem Sattelauflieger) zugewandte Seite ist die Befestigungsseite des Transportkältesystems. In diesem Falle erfolgt dann das Ausgeben der Luft über einen Luftauslass an einer gegenüberliegenden Seite von der Befestigungsseite des Transportkältesystems weg.

Durch den so ausgelegten Luftauslass ist es möglich, einen Luftvorhang zu bilden, der ein Strömen von nach oben aufsteigender Warmluft in den Lufteinlass hinein verhindert oder minimiert. Dadurch wird sichergestellt, dass der Lufteinlass Luft aufnimmt, die für ein Kühlen des Kondensators ausreichend kalt ist bzw. die hierzu am besten geeignet ist. Ein Abschalten des Transportkältesystems aufgrund einer zu warmen in den Lufteinlass strömenden Luft kommt demnach nicht oder mit sehr viel geringerer Wahrscheinlichkeit vor als im Vergleich zu herkömmlichen Transportkältesystemen.

Nach einer optionalen Modifikation der Erfindung weist die Strömungsrichtung der durch den Luftauslass ausgegebenen Luft einen Richtungsanteil auf, der senkrecht zur Befestigungsseite ist und von dieser wegführt, wobei vorzugsweise die Richtung schräg von der Befestigungsseite wegführt. Das Transportkältesystem bläst die Luft also in eine Richtung, die von der Befestigungsseite wegführt, mit dem Ziel, die Lufttemperatur der über den Lufteinlass einströmenden Luft auf einem vorteilhaften Niveau zu festigen. Dabei kann vorteilhafterweise vorgesehen sein, dass in den Lufteinlass einströmende Warmluftströmungen mit Hilfe der aus dem Lufteinlass ausgegebenen Luft derart abgelenkt werden, dass ein Eindringen der warmen Luftströmungen in den Lufteinlass nicht oder nur minimal erfolgt.

Warmluftströmungen sind bspw. vom Asphalt erhitzte Luft oder die Abwärme eines thermisch belasteten Bauteils einer Zugmaschine.

Gemäß einer Fortbildung der Erfindung ist der Luftauslass dazu ausgelegt, die Luft in eine Richtung ausströmen zu lassen, die von einer durch die Befestigungsseite definierten Ebene wegführt, wobei vorzugsweise die Befestigungsseite eine ebene Befestigungsseite ist.

Vorzugsweise ist das Transportkältesystem an einer vorderen Stirnseite eines Sattelaufliegers angeordnet, wobei die vordere Stirnseite eines Sattelaufliegers diejenige Stirnseite eines Sattelaufliegers ist, die einer Kopplungseinheit des Sattelaufliegers für eine Zugmaschine näher ist.

Da ein Sattelauflieger typischerweise eine ebene vordere bzw. eine ebene hintere Stirnseite aufweist, ist das erfindungsgemäße Transportkältesystem so ausgestaltet, dass die aus dem Luftauslass strömende Luft in eine Richtung strömt, die von einer durch eine der Stirnseiten definierten Ebene wegführt.

Gemäß einer weiteren Modifikation der Erfindung ist das Transportkältesystem derart an dem Sattelauflieger angeordnet, dass der Luftauslass die ausströmende Luft an einer zum Sattelauflieger abgewandten Seite schräg nach unten vorne vom Sattelauflieger weg ausströmen lässt. Ein Sattelauflieger weist eine Bodenfläche auf, die einem Untergrund zugewandt ist. Zur einfacheren Beschreibung der aus dem Transportkältesystem austretenden Luftströmung wird ein Koordinatensystem definiert, das der üblichen Wortwahl bei einer bestimmungsgemäßen Orientierung eines Sattelaufliegers entspricht. Zur weiteren Klarstellung findet sich das Koordinatensystem auch in der einzigen Figur der Anmeldung. So wird eine Richtung, die von einem mittigen Punkt im Sattelauflieger ausgeht und in Richtung einer einem Untergrund zugewandten Bodenfläche verläuft, als auch nach unten verlaufend bezeichnet. Eine entgegengesetzte Richtung beschreibt einen Verlauf nach oben. Eine Richtung hin zur vorderen Stirnseite beschreibt eine Richtung nach vorne, wohingegen die hierzu entgegengesetzte Richtung eine Richtung nach hinten beschreibt. Bei einer bestimmungsgemäßen Orientierung eines Sattelaufliegers bzw. einer Transporteinheit ist eine Bodenebene im Wesentlichen parallel zu einer Bodenfläche bzw. einer Deckenfläche des Sattelaufliegers bzw. der Transporteinheit, wobei die Bodenfläche dem Untergrund näher ist als die Deckenfläche. Das Transportkältesystem ist demnach so an einer Stirnseite eines Sattelaufliegers angeordnet, dass der Luftauslass die Luft in einer Richtung ausströmen lässt, die von dem Sattelauflieger weg schräg nach unten gerichtet ist.

Vorzugsweise ist der Luftauslass dazu ausgelegt, die ausströmende Luft in Einlass wegführende Richtung ausströmen zu lassen, um einen Luftkurzschluss von Luft zu minimieren oder zu verhindern, dass Luft vom Luftauslass zum Lufteinlass strömt.

Gemäß einer weiteren Ausführung der Erfindung ist es von Vorteil, wenn das Transportkältesystem im Zwischenraum einer Zugmaschine und des mit der Zugmaschine gekoppelten Sattelaufliegers angeordnet ist, wobei das Ausströmen der Luft aus dem Luftauslass in Richtung der Zugmaschine einen Luftvorhang erzeugt, um zu verhindern oder um zu minimieren, dass aus Bodenrichtung aufsteigende Warmluft in den oberhalb des Luftauslasses angeordneten Lufteinlass einströmt.

Das Ausblasen der durch die Kühlung des Kondensators bereits erwärmten Luft aus der Transportkältemaschine in Richtung der Zugmaschine erzeugt einen Luftvorhang zwischen Sattelauflieger und Zugmaschine, der aus Bodenrichtung aufsteigende Warmluft von einem Einströmen in den Lufteinlass der Transportkältemaschine hindert. Teilweise befinden sich die Wärmequellen der Zugmaschine unterhalb des Kältesystems, sodass hierdurch oder auch durch Asphalt oder dergleichen erwärmte Luft im Zwischenraum von Sattelauflieger und Zugmaschine nach oben strömt. Ohne den durch die erfindungsgemäße Transportkältemaschine erzeugten Luftvorhang würde es zu einem Einströmen dieser erwärmten Luft in den Lufteinlass kommen, was unter Umständen zu einem Abschalten der Transportkältemaschine bzw. des darin angeordneten Kältekreislaufs führen würde. Der Luftvorhang, der durch den in Richtung der Zugmaschine gerichteten Luftauslass aufgebaut wird, verhindert das senkrechte Strömen bzw. das Aufsteigen dieser Warmluft und ein Eindringen in den Lufteinlass. Da zudem die von der Transportkältemaschine ausgegebene Luft auch noch schräg von dem Lufteinlass weggerichtet ist (=schräg nach unten), wird auch dafür gesorgt, dass ein Luftkurzschluss, also das Einströmen von gerade ausgegebener Luft minimiert oder verhindert wird. Das erfindungsgemäße Transportkältesystem wird daher kontinuierlich mit ausreichend kalter Umgebungsluft versorgt und nimmt nicht vom Boden oder von Wärmequellen der Zugmaschine erwärmte Luft auf.

Vorzugsweise ist der Luftauslass dazu ausgelegt, die ausströmende Luft in eine vom Lufteinlass wegführende Richtung ausströmen zu lassen, um einen Luftkurzschluss von vom Luftauslass zum Lufteinlass strömenden Luft zu minimieren oder zu verhindern.

Nach einer weiteren optionalen Modifikation ist das Transportkältesystem im Zwischenraum einer Zugmaschine und des mit der Zugmaschine gekoppelten Sattelaufliegers angeordnet, und das Ausströmen der Luft aus dem Luftauslass in Richtung der Zugmaschine erzeugt einen Luftvorhang, um zu verhindern oder um zu minimieren, dass aus Bodenrichtung aufsteigende Warmluft in den oberhalb des Luftauslasses angeordneten Lufteinlass einströmt.

Bei einer bestimmungsgemäßen Orientierung des Transportkältesystems bzw. des Sattelaufliegers, an dem das Transportkältesystem angeordnet ist, ist der Lufteinlass oberhalb des Luftauslasses angeordnet.

Vorzugsweise ist das Transportkältesystem an einer Transporteinheit, insbesondere einem Sattelauflieger angeordnet, und der Kondensatorlüfter sowie der Luftauslass sind unterhalb des Kondensators angeordnet und der Kondensator ist unterhalb des Lufteinlasses angeordnet. Erneut wird hierbei auf das eingeführte Koordinatensystem mit den zugehörigen Richtungsangaben verwiesen, sowie eine bestimmungsgemäße Orientierung des Transportkältesystems vorausgesetzt.

Zudem kann vorgesehen sein, dass ferner eine Zugangsöffnung zum Inneren des Transportkältesystems vorgesehen ist, die an einer zur Befestigungsseite gegenüberliegenden Seite angeordnet ist und in einem geschlossenen Zustand einen Teil des Luftkanals bildet, wobei vorzugsweise die Zugangsöffnung eine verschwenkbare Türe ist. Indem die Zugangsöffnung gleichzeitig einen Teil des Luftkanals bildet, der den Lufteinlass mit dem Luftauslass verbindet, werden durch ein Öffnen der Zugangsöffnung unmittelbar die relevanten Bauteile des Transportkältesystems zugänglich oder freigelegt, sodass die Zeit bei Wartungsarbeiten deutlich reduziert werden kann. Vorzugsweise bildet die Zugangsöffnung in einem Abschnitt zwischen Lufteinlass und Kondensator einen Teil des Luftkanals.

Nach einer weiteren Fortbildung der Erfindung legt die Zugangsöffnung im offenen Zustand den Kondensator frei und bildet im geschlossenen Zustand eine Frontseite des Transportkältesystems.

Gemäß einer bevorzugten Ausführung der Erfindung ist der Lufteinlass im oberen Drittel, vorzugsweise im oberen Viertel, bevorzugterweise im oberen Fünftel des Transportkältesystems angeordnet. Dabei beschreibt das obere Drittel, das obere Viertel, bzw. das obere Fünftel den von einer Bodenebene entferntesten Abschnitt des Transportkältesystems bei bestimmungsgemäßer Orientierung des Transportkältesystems.

Weiterhin kann vorgesehen sein, dass die Kondensatorluftausblasung zwischen dem oberen Viertel und dem unteren Viertel, vorzugsweise zwischen dem oberen Drittel und dem unteren Drittel des Transportkältesystems angeordnet ist.

Vorzugsweise ist der Kondensator in einer zur vertikalen geneigten Anordnung oder in einer etwa horizontalen Ausrichtung angeordnet. Dadurch kann die effektive Fläche des Kondensators erhöht und die Anströmung von Luft verbessert werden. Dies führt im Ergebnis zu einem effizienteren Kühlvorgang des Kondensators.

Gemäß einer weiteren, optionalen Modifikation der Erfindung ist in dem Luftkanal eine weitere Komponente eingebracht, vorzugsweise eine Unterkühlungsstrecke, durch die das kondensierte Kältemittel weiter abgekühlt wird. Vorzugsweise wird die Unterkühlungsstrecke in Luft-Strömungsrichtung vor dem Kondensator angebracht, um diese mit Luft möglichst niedriger Temperatur zu kühlen.

Gemäß einer Fortbildung der Erfindung dient die aus dem Luftauslass strömende Luft dazu, eine Wärmequelle einer Zugmaschine, die mit der Transporteinheit des Transportkältesystems gekoppelt ist, mit Luft zu beaufschlagen. Dies kann zu einem Kühleffekt der Wärmequelle führen, sodass dies positive Auswirkungen auf die Zugmaschine bzw. deren Leistungsfähigkeit hat.

Weitere Merkmale, Einzelheiten und Vorteile werden anhand der nachfolgenden Beschreibung der einzigen Figur deutlich.

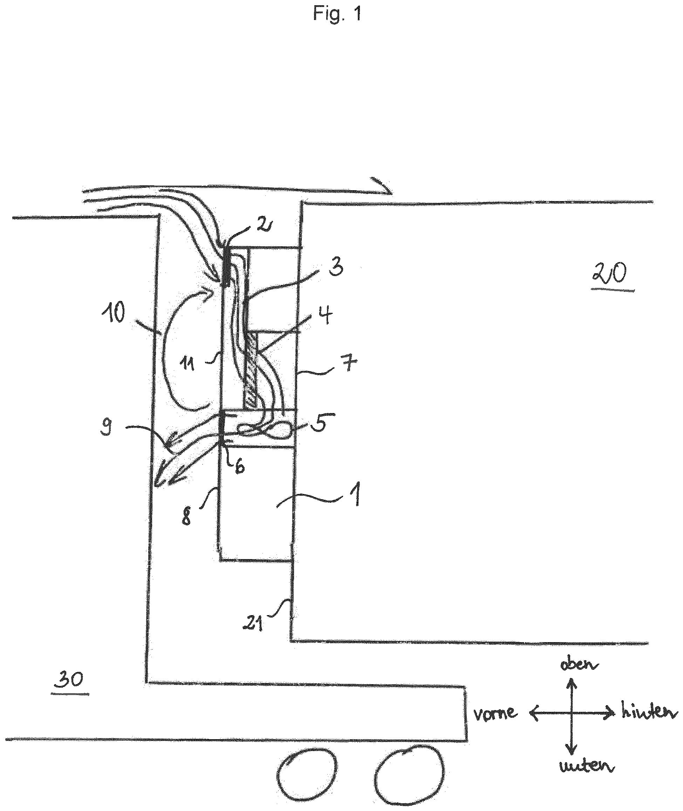

Fig. 1 zeigt das erfindungsgemäße Transportkältesystem 1 an einem Sattelauflieger 20. Dabei ist das Transportkältesystem 1 an einer Stirnseite des Sattelaufliegers 20 angeordnet und befindet sich in einem Zwischenraum zwischen der Zugmaschine 30 und dem Sattelauflieger 20. Unten rechts im Bild ist ein Koordinatensystem dargestellt, um die verschiedenen Richtungen auf einfache Art in grafischer Weise zu erläutern.

Während eines Fortbewegens der Zugmaschine 30 zusammen mit dem Sattelauflieger 20 strömt ein Fahrtwind im oberen Bereich der Zugmaschine nach hinten in Richtung des Sattelaufliegers 20. Das Transportkältesystem 1 weist einen Lufteinlass 2 im oberen Bereich der Transportkältemaschine 1 auf. In dem Lufteinlass 2 strömt Luft ein, und wird dann entlang eines Luftkanals 3 zu einem im Luftkanal 3 angeordneten Kondensator 4 geführt. Stromabwärts des Kondensators 4 ist ein Kondensatorlüfter 5 angeordnet, der dazu dient, die Luft in den Lufteinlass 2 einzusaugen und die Luft aus dem Transportkältesystem 1 über einen Luftauslass 6 auszugeben. Man erkennt, dass der Luftauslass 6 des Transportkältesystems die auszugebende Luft nach vorne in Richtung der Zugmaschine 30 ausgibt. Aufgrund des relativ geringen Abstands von dem Transportkältesystem 1 zu der Rückseite der Zugmaschine 30 sowie der in Richtung der Zugmaschine 30 gerichteten Luftströmung aus dem Luftauslass 6 entsteht ein Luftvorhang 9, der unterhalb des Luftauslasses 6 nach oben strömende Warmluft von einem Eindringen in den oberhalb des Luftauslasses 6 angeordneten Lufteinlasses 2 hindert. Steht die Zugmaschine 30, können hohe Umgebungstemperaturen bzw. die Sonneneinstrahlung dafür sorgen, dass von einem Boden oder einem Asphalt nach oben strömende erhitzte Luft in Kombination mit von Wärmequellen der Zugmaschine 30 erwärmte Luft in den Lufteinlass 2 kommen und zu einem Verringern eines Kühleffekts des Kondensators 4 führen. Dies würde unter Umständen ein Abschalten des Kältekreislaufs bzw. ein Abschalten des Transportkältesystems notwendig machen, was unter Umständen zu einem Verlassen des eingestellten Temperaturbereichs für den Innenraum des Sattelaufliegers 20 führen kann. Der Luftvorhang 9, der durch das Ausgeben der aus dem Luftauslass 6 strömenden Luft an einer zur Befestigungsseite 7 des Transportkältesystems gegenüberstehenden Seite erzeugt wird, verhindert das Einströmen von durch den Boden bzw. Asphalt erwärmten Luft oder auch das Einströmen von durch Wärmequellen der Zugmaschine 30 erwärmten Luft, die im Zwischenraum von Zugmaschine 30 und Sattelauflieger 20 nach oben steigen würde. Die Anordnungsposition des Lufteinlasses 2 am oberen Ende des Transportkältesystems 1 führt zudem dazu, dass kühle Umgebungsluft angesaugt wird.

Weiter erkennt man, dass der Luftvorhang 9 durch ein schräg nach unten erfolgendes Ausblasen der Luft aus dem Luftauslass 6 erfolgt. Indem die Richtung der ausgeblasenen Luft von dem Lufteinlass 2 wegführt, nämlich nach unten, wohingegen der Lufteinlass 2 oberhalb des Luftauslasses 6 angeordnet ist, wird auch ein sogenannter Luftkurzschluss, der das Einströmen in das Transortkältesystem von der gerade aus dem Transportkältesystem ausgeblasenen Luft beschreibt, minimiert oder verhindert. Der Luftkurzschluss 10 wird demnach also durch den von dem Lufteinlass 2 weg gerichteten Luftvorhang 9 minimiert oder verhindert.

Das Transportkältesystem 1 ist in der Figur an der vorderen Stirnseite 21 des Sattelaufliegers angeordnet. Dabei weist das Transportkältesystem eine Befestigungsseite 7 auf, die der vorderen Stirnseite 21 des Sattelaufliegers 20 zugewandt ist. Die der vorderen Stirnseite 21 abgewandte Seite 8 des Transportkältesystems 1 wird auch als Frontseite 8 bezeichnet. Typischerweise befindet sich an der Frontseite 8 auch eine Zugangsöffnung 11, die im geschlossenen Zustand einen Teil eines Luftkanals 3 von dem Lufteinlass 2 in Richtung des Kondensators 4 bildet.

In der Zeichnung ist der Kondensator 4 als vertikal orientierter Kondensator dargestellt. Dabei ist jedoch möglich, den Kondensator 4 schräg oder horizontal anzuordnen, um die effektive mit der Luft in Kontakt stehende Fläche zu vergrößern.

Ferner kann die vom Luftauslass 6 abgegebene Luft, bzw. der damit gebildete Luftvorhang 9 auch dazu genutzt werden, eine Wärmequelle der Zugmaschine 30 mit Luft zu beaufschlagen, sodass die Wärmequelle gekühlt wird. Dazu wird die aus dem Luftauslass 6 strömende Luft bspw. auf eine Wärmequelle der Zugmaschine gerichtet, um die Temperatur der Wärmequelle abzusenken.

## Patentansprüche

1. Transportkältesystem (1) für eine Transporteinheit (20), umfassend:
einen Lufteinlass (2) zum Einströmen von Luft,
einen Luftkanal (3) zum Leiten der eingeströmten Luft,
einen Kondensator (4), der im Luftkanal (3) angeordnet ist, um mit der im Luftkanal (3) strömenden Luft beaufschlagt zu werden, und
einen Kondensatorlüfter (5) zum Ansaugen der Luft in den Lufteinlass (2) und zum Ausblasen der Luft aus einem Luftauslass (6), wobei
das Transportkältesystem (1) eine flächige Befestigungsseite (7) aufweist, die dazu ausgelegt ist, bei Befestigung an einer Transporteinheit (20) dieser zugewandt zu sein,
**dadurch gekennzeichnet, dass**
der Luftauslass (6) die Luft an einer der Befestigungsseite (7) gegenüberstehenden Seite (8) des Transportkältesystems (1) ausgibt.

2. Transportkältesystem (1) nach Anspruch 1, wobei die Strömungsrichtung der durch den Luftauslass (6) ausgegebenen Luft einen Richtungsanteil aufweist, der senkrecht zur Befestigungsseite (7) ist und von dieser wegführt, wobei vorzugsweise die Richtung schräg von der Befestigungsseite (7) wegführt.

3. Transportkältesystem (1) nach einem der vorhergehenden Ansprüche, wobei der Luftauslass (6) dazu ausgelegt ist, die Luft in eine Richtung ausströmen zu lassen, die von einer durch die Befestigungsseite (7) definierten Ebene wegführt, wobei vorzugsweise die Befestigungsseite (7) eine ebene Befestigungsseite (7) ist.

4. Transportkältesystem (1) nach einem der vorhergehenden Ansprüche, wobei das Transportkältesystem (1) an einer vorderen Stirnseite (21) eines Sattelaufliegers (20) angeordnet ist, wobei die vordere Stirnseite (21) eines Sattelaufliegers (20) diejenige Stirnseite ist, die einer Kopplungseinheit des Sattelaufliegers (20) für eine Zugmaschine (30) näher ist.

5. Transportkältesystem (1) nach Anspruch 4, wobei das Transportkältesystem (1) derart an dem Sattelauflieger (20) angeordnet ist, dass der Luftauslass (6) die ausströmende Luft an einer zum Sattelauflieger (20) abgewandten Seite schräg nach unten vorne vom Sattelauflieger (20) weg ausströmen lässt.

6. Transportkältesystem (1) nach einem der vorhergehenden Ansprüche 4 oder 5, wobei der Luftauslass (6) dazu ausgelegt ist, die ausströmende Luft in eine vom Lufteinlass (2) wegführende Richtung ausströmen zu lassen, um einen Luftkurzschluss (10) von vom Luftauslass (6) zum Lufteinlass (2) strömenden Luft zu minimieren oder zu verhindern.

7. Transportkältesystem (1) nach einem der vorhergehenden Ansprüche 4 bis 6, wobei das Transportkältesystem (1) im Zwischenraum einer Zugmaschine (30) und des mit der Zugmaschine (30) gekoppelten Sattelaufliegers (20) angeordnet ist, und das Ausströmen der Luft aus dem Luftauslass (6) in Richtung der Zugmaschine (30) einen Luftvorhang (9) erzeugt, um zu verhindern oder um zu minimieren, dass aus Bodenrichtung aufsteigende Warmluft in den oberhalb des Luftauslasses (6) angeordneten Lufteinlass (2) einströmt.

8. Transportkältesystem (1) nach einem der vorhergehenden Ansprüche, wobei das Transportkältesystem (1) an einer Transporteinheit (20), insbesondere einem Sattelauflieger (20), angeordnet ist, und der Luftauslass (6) unterhalb des Kondensators (4) angeordnet ist und der Kondensator (4) unterhalb des Lufteinlasses (2) angeordnet ist.

9. Transportkältesystem (1) nach einem der vorhergehenden Ansprüche, ferner umfassend eine Zugangsöffnung (11) zum Inneren des Transportkältesystems (1), die an einer zur Befestigungsseite (7) gegenüberliegenden Seite (8) angeordnet ist und in einem geschlossenen Zustand zumindest einen Teil des Luftkanals (3) bildet, wobei vorzugsweise die Zugangsöffnung (11) eine schwenkbare Türe ist.

10. Transportkältesystem (1) nach Anspruch 9, wobei die Zugangsöffnung (11) im offenen Zustand den Kondensator (4) freilegt und im geschlossenen Zustand eine Frontseite (8) des Transportkältesystems (1) bildet, wobei vorzugsweise die Frontseite (8) von der Befestigungsseite (7) abgewandt ist.

11. Transportkältesystem (1) nach Anspruch 9 oder 10, wobei an der Zugangsöffnung (11) Bauteile zur Reduktion des Schalldruckpegels des Transportkältesystems angeordnet sind.

12. Transportkältesystem (1) nach einem der Ansprüche 5-11, wobei der Lufteinlass (2) im oberen Drittel, vorzugsweise im oberen Viertel, bevorzugterweise im oberen Fünftel des Transportkältesystems (1) angeordnet ist.

13. Transportkältesystem (1) nach einem der Ansprüche 5-12, wobei der Kondensatorlüfter (5) und oder der Luftauslass (6) zwischen dem oberen Viertel und dem unteren Viertel, vorzugsweise zwischen dem oberen Drittel und dem unteren Drittel des Transportkältesystems (1) angeordnet ist.

14. Transportkältesystem (1) nach einem der vorhergehenden Ansprüche, wobei in den Luftkanal (3) eine weitere Komponente, vorzugsweise eine Unterkühlungsstrecke in der Art eingebracht ist, dass die Unterkühlungsstrecke in Luft-Strömungsrichtung vor dem Kondensator liegt.

15. Transportkältesystem (1) nach einem der vorhergehenden Ansprüche, wobei der Luftkanal zur unabhängigen Versorgung mehrerer Kältemodule vollständig oder teilweise geteilt werden kann, wobei jeder Kanal oder jedes Teilstück des Kanals mindestens einem Kondensator und mindestens einem Lüfter zugeordnet ist.

16. Transportkältesystem (1) nach einem der vorhergehenden Ansprüche, wobei die aus dem Luftauslass (6) strömende Luft dazu dient, eine Wärmequelle einer Zugmaschine (30), die mit der Transporteinheit (20) des Transportkältesystems (1) gekoppelt ist, mit Luft zu beaufschlagen.
